(19) Europäisches Patentamt
European Patent Office
Office européen des brevets

(11) **EP 0 775 561 B1**

(12) **EUROPEAN PATENT SPECIFICATION**

(45) Date of publication and mention of the grant of the patent:
**11.09.2002 Bulletin 2002/37**

(51) Int Cl.⁷: **B29B 11/16**, B29C 70/50, B29C 70/18

(21) Application number: **96916302.1**

(22) Date of filing: **05.06.1996**

(86) International application number:
**PCT/JP96/01507**

(87) International publication number:
**WO 96/040477 (19.12.1996 Gazette 1996/55)**

(54) **GLASS FIBER MAT FOR STAMPABLE SHEET, PROCESS FOR THE PRODUCTION OF THE MAT, STAMPABLE SHEET MADE FROM SAID MAT, PROCESS FOR THE PRODUCTION OF THE SHEET, AND EQUIPMENT FOR THE PRODUCTION THEREOF**

GLASVLIES FÜR BESTEMPELBARE FOLIE, VERFAHREN ZUM HERSTELLEN DIESES VLIESES, BESTEMPELBARE FOLIE HERGESTELLT AUS DIESEM VLIES, VERFAHREN ZUM HERSTELLEN DIESER FOLIE UND VORRICHTUNG ZU DEREN HERSTELLUNG

MAT DE FIBRES DE VERRE POUR FEUILLE A ESTAMPER, PROCEDE DE PRODUCTION DE CE MAT, FEUILLE A ESTAMPER FABRIQUEE A PARTIR DE CE MAT, PROCEDE DE FABRICATION DE LA FEUILLE ET EQUIPEMENT DE PRODUCTION CORRESPONDANT

(84) Designated Contracting States:
**DE FR GB IT SE**

(30) Priority: **07.06.1995 JP 14093795**

(43) Date of publication of application:
**28.05.1997 Bulletin 1997/22**

(73) Proprietor: **Japan GMT Co., Ltd.**
**MIE 510-0051 (JP)**

(72) Inventors:
 • **YOKOKITA, Masahiko,**
   **UBE-NITTO KASEI CO., LTD.**
   **Chuo-ku, Tokyo 103 (JP)**
 • **SHICHIRI, Yoshinobu,**
   **UBE-NITTO KASEI CO., LTD.**
   **Chuo-ku, Tokyo 103 (JP)**
 • **ONODERA, Akio, UBE-NITTO KASEI CO., LTD.**
   **Chuo-ku, Tokyo 103 (JP)**
 • **WATANABE, Toru, UBE-NITTO KASEI CO., LTD.**
   **Chuo-ku, Tokyo 103 (JP)**
 • **MATSUNO, Shigehiro,**
   **UBE-NITTO KASEI CO., LTD.**
   **Chuo-ku, Tokyo 103 (JP)**

(74) Representative: **Klingseisen, Franz, Dipl.-Ing.**
   **Patentanwälte,**
   **Dr. F. Zumstein,**
   **Dipl.-Ing. F. Klingseisen,**
   **Postfach 10 15 61**
   **80089 München (DE)**

(56) References cited:
   **EP-A- 0 434 846        JP-A- 3 167 240**

 • **PATENT ABSTRACTS OF JAPAN vol. 018, no. 226 (C-1194), 25 April 1994 & JP 06 017354 A (SEKISUI CHEM CO LTD), 25 January 1994,**

## EP 0 775 561 B1

**Description**

The present invention relates to a glass fiber mat for a stampable sheet, a production process thereof, a stampable sheet employing the glass fiber mat, a production process thereof, and a production system therefor.

JP 06017354 discloses a method for producing a composite article. According to this method, steel nets are laminated to matlike articles comprising glass fibers. These laminated products are compressed in the thickness direction, and subsequently glass fibers are grinded at parts in contact with the steel nets. In order to form a laminate, the steel nets are removed subsequently and polyethylene films are superposed on both sides of the mat-like article. Subsequently the laminate is molten by heating and is compressed in the molten state. Finally the laminate is expanded in order to increase its thickness.

A stampable sheet is a sheet form article, in which a thermoplastic resin is impregnated in a reinforcement fiber. There are various stampable sheets depending upon production processes, forms of reinforcement fibers. As production processes of the stampable sheet, a lamination method and dispersing method have been known.

The lamination method is a method, in which a fiber mat is prepared from the reinforcement fiber at first, the fiber mat and a thermoplastic resin sheet or molten thermoplastic resin sheet are stacked, and then, the thermoplastic resin is impregnated into the fiber mat by applying heat and pressure (U. S. Patent No 3,850,723).

On the other hand, the dispersing method is a method for producing the stampable sheet, in which after mixingly disperse reinforcement fiber and thermoplastic resin, the mixture is shaped into a sheet form, and heat and pressure is applied to the sheet form mixture, which is divided into a wet method to perform mixing and dispersing in water Japanese Examined Patent Publication No. Heisei 4-40372) and a dry method to perform mixing and dispersing within a special mixer without using water Japanese Unexamined Patent Publication (Kokai) No. Heisei 4-173311). The wet method is to mix reinforcement short fiber and thermoplastic resin powder in water, make into a sheet by a paper machine with adding a flocculating agent or a binder, remove water and dry to form a sheet, stack a plurality of sheets as required, and apply heat and pressure to obtain the stampable sheet. On the other hand, the dry method is to mix reinforcement fiber and thermoplastic resin powder within a special mixing chamber, to form into sheet form on a belt and to apply heat and pressure to form the stampable sheet.

The features of the stampable sheet formed by the lamination method are to have high impact strength since the reinforcement fiber is continuous fiber, and to be difficult to cause local orientation for mechanical entangling of fibers. On the other hand, since the reinforcement fiber cannot be sufficiently filled in a rib or a boss, designed strength cannot be achieved. Therefore, freedom in designing of the product is low.

On the other hand, the stampable sheet produced by dispersing method has shorter fiber in comparison with the lamination method to easily cause fluctuation of strength due to local orientation of the reinforcement fiber, and has low impact strength. On the other hand, since the reinforcement fiber can be filled even in the rib or boss, designing of the product is easy.

Therefore, there are several proposals for taking the feature of the short fiber reinforcement in the stampable sheet of the long fiber reinforcement typically as formed by lamination method.

For example, examples of attempts for improvement by. impregnating a resin containing short fiber in a long fiber mat have been disclosed in Japanese Examined Patent Publication No. Heisei 4-65854. However, in such method, as pointed out in Japanese Unexamined Patent Publication No. Showa 64-4320, most of the short fiber is filtered by the long fiber mat to penetrate almost only resin into the mat. Then, most of the short fiber forms a layer in the vicinity of the surface of the long fiber mat. When stamp forming is performed with such stampable sheet, the short fiber may occupy most proportion of the reinforcement fiber to be filled, in the rib, boss and the end portion of the formed product, conversely, in a charge portion of the original sheet, the long fiber may occupy most proportion. As a result, difference of proportions of the long fiber and the short fiber can be caused at various portions of the product to cause difference in impact strength and fatigue characteristics, or, anisotropy may be caused due to local orientation of the short fiber. Furthermore, distortion may also be caused.

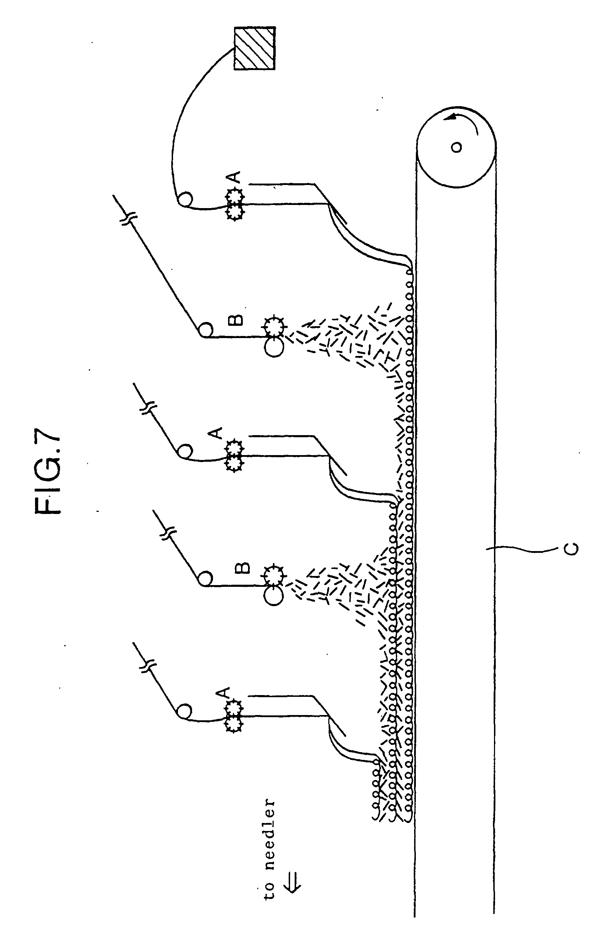

While not directed to the stampable sheet, as a sheet form material of a fiber reinforced thermoplastic resin, which can be formed by a pressure forming, and in which the long fiber and the short fiber are combined, there is one, in which a long fiber mat and a short fiber mat are stacked and the thermoplastic resin is impregnated into the stacked mats, as disclosed in Japanese Unexamined Patent Publication No. Showa 58-98241. In this publication, respective one long fiber mat and short fiber mat are stacked and the thermoplastic resin in impregnated thereinto. With taking this as hint, it can be considered that the stampable sheet, in which the continuous fiber and the short fiber are uniformly distributed can be easily obtained by stacking a plurality of thin continuous fiber mats and thin short fiber mats and formed into a mat by needle punch, and impregnating thermoplastic resin into the needle punched mat. However, when this is practiced, as shown in Fig. 7, for example, production units (A) of the continuous fiber mat and production units (B) of the short fiber mat have to be arranged alternately along transporting direction (left and right direction in the drawing) of a conveyer C and thus requires a huge amount of investment.

Then, upon needle punching the continuous fiber mat, when punching density is increased or penetration depth of the needle is made deeper, cutting of the fiber is increased. Thus, a mat, in which the short fiber is distributed in the continuous fiber, can be obtained. By impregnating the thermoplastic resin in this mat, the stampable sheet can be obtained.

However, such stampable sheet holds the following drawback. Namely, when the punching density is increased, entangling of the fibers can become stronger to make the mat difficult to loose upon forming. This causes requirement for higher forming pressure. On the other hand, when the penetration depth of the needle is made deeper, the fibers oriented in the thickness direction is increased to make a loft (nominal thickness) of the mat larger. As a result, upon heating, a blank (hot blank) is expanded significantly to cause temperature difference between the inner layer and the surface layer. If heating period is expanded for eliminating the temperature difference, the surface layer can be overheated to degrade appearance. Furthermore, heating aging can be promoted to degrade physical properties.

Therefore, the present invention is to provide a glass fiber mat for a stampable sheet, in which long fiber and short fiber may not be separated and distributed uniformly even in forming process, and which can make features in respective fiber effective, a production process thereof, a stampable sheet employing this glass fiber mat, a production process thereof, and a production system therefor.

These objects are solved by the features recited in claims 1, 7 and 10.

As a result of extensive study for solving the problems set forth above, the inventor has found that the problem can be solved by employing a glass fiber mat, in which a glass fiber mat forming a glass fiber mat for a stampable sheet is formed with continuous glass fiber and short glass fiber produced by clamping the glass fiber under pressure for partially causing cutting of the fiber, and thus containing long fiber in the length longer than or equal to 10 mm and short fiber in the length shorter than 10 mm.

In the preferred construction, the glass fiber mat is obtained by clasping a continuous fiber needling mat, in which different fiber length of fibers are entangles each other, and the long fiber having fiber length greater than or equal to 10 mm and short fiber having fiber length less than 10 mm are distributed uniformly. The glass fiber mat may contains 30 to 60 Wt% of glass fiber having fiber length less than 10 mm, 70 to 40 Wt% of glass fiber having fiber length greater than or equal to 10 mm, and the glass fiber having fiber length greater than or equal to 10 mm contains more than or equal to 5% of glass fiber having fiber length greater than or equal to 50 mm. When a unit weight is 900 $g/m^2$, a tensile strength is 0.5 to 3 kgf/200 mm and a mat loft is 5 to 10 mm.

A stampable sheet, according to the present invention, is produced by impregnating a thermoplastic resin into the glass fiber mat. Preferably, a fiber content is 40 Wt% and a unit weight is 4.4 $kg/m^2$, a hot blank loft is 6 to 16 mm.

A production process for producing a glass fiber mat to be formed into a fiber reinforced thermoplastic resin stampable sheet by impregnation of a thermoplastic resin, according to the present invention, comprises a step of clasping a glass fiber mat formed with continuous glass fiber or a continuous glass fiber needling mat between a pair of rollers at a predetermined pressure to form long fiber having fiber length greater than or equal to 10 mm and short fiber having fiber length less than 10 mm which are formed by partially cutting the glass fiber.

A production process for producing a fiber reinforced thermoplastic stampable sheet by impregnating a thermoplastic resin, according to one aspect of the present invention, comprises the steps of needling a continuous glass fiber mat for entangling fibers, clasping the glass fiber mat formed with continuous glass fiber for partially cutting the fiber, and thereafter impregnating the thermoplastic resin.

A production system of a stampable sheet, according to the present invention, comprise a laminator, fiber mat supply means for supplying a glass fiber mat into the laminator, and a pair of rollers arranged between the laminator and the fiber mat supply means and clasping the fiber mat for partially cutting the glass fiber into longer fiber having fiber length greater than or equal to 10 mm and short fiber having fiber length less than 10 mm.

BRIEF DESCRIPTION OF THE DRAWINGS

Fig. 1 is an explanatory illustration showing one embodiment of a stampable sheet producing system according to the present invention;

Fig. 2 is a perspective view showing a sample for deriving a minimum forming pressure;

Fig. 3 is a perspective view showing a sample for evaluating forming mobility A (GC ratio);

Fig. 4 is a perspective view showing a sample for measuring general mechanical property;

Fig. 5(a) is a perspective view showing a sample for evaluating forming mobility B (flow of GF to a rib), Fig. 5(b) is an enlarged section of the rib;

Fig. 6 is a perspective view showing a sample for evaluation of anisotropy; and

Fig. 7 is an explanatory illustration showing one example of the conventional production process of a composite mat of continuous fiber and short fiber.

## DESCRIPTION OF THE PREFERRED EMBODIMENT

A glass fiber mat, in accordance with the present invention, is constructed with a glass fiber mat forming a glass fiber mat for a stampable sheet formed with continuous glass fiber and short glass fiber produced by clasping the glass fiber under pressure for partially causing cutting of the fiber, and thus contains long fiber in the length longer than or equal to 10 mm and short fiber in the length shorter than 10 mm.

Here, it is preferred that the short fiber (fiber length is less than 10 mm) and the long fiber (fiber length is greater than or equal to 10 mm) are distributed uniformly in the mat. While a construction, in which short fiber is arranged on upper and lower surfaces of a mat of the long fiber can be often seen, the short fiber and the long fiber may be separated in secondary forming to cause local concentration in the length of the fiber to be filled in various portions of the formed product. This can be a cause of fluctuation of mechanical property to make difficulty designing of the products.

It is preferred that the glass fiber having the fiber length greater than or equal to 10 mm is contained in a rate of 40 to 70 Wt/%. In case of the mat having only fiber less than 10 mm of the fiber length, the stampable sheet obtained from such mat has poor impact resistance and is easily cause local orientation of the fiber during forming. On the other hand, in case of the glass fiber mat formed with fiber having a fiber length greater than or equal to 10 mm, number of entangling points becomes large number to require higher forming pressure for obtaining secondary product. As a result, low productivity such as forming speed can be lowered and large scale of production facility becomes necessary.

On the other hand, it is further preferred that the glass fiber having fiber length greater than or equal to 50 mm is contained in a range of 5 to 10 Wt%. When the content of the glass fiber having fiber length greater than or equal to 50 mm is less than 5%, the short fiber and the longer fiber may be separated during secondary forming to local concentration of the fiber, and orientation of the shorter fiber can be caused. As a result, anisotropy in the physical property can be caused. Conversely, when the content of the glass fiber having fiber length greater than or equal to 50 mm is greater than 10%, mobility in the secondary forming tends to be degraded.

On the other hand, in the glass fiber mat, when the unit weight (hereinafter referred to as "Metsuke") is standard 900 $g/m^2$, it is preferred that a tensile strength is 0.5 to 3 kgf/200 mm, and a mat loft is 5 to 10 mm. Normally, while the tensile strength of the continuous fiber mat obtained by needling is in the order of 20 kg, most of the fiber is continuously entangled. Thus, it is difficult to fill the glass fiber in the small portion of the formed product, such as rib, boss or so forth. Accordingly, in order to obtain sufficient mobility as intended by the present invention, it is required that the tensile strength is less than or equal to 3 kg. Furthermore, when the tensile strength of the mat is less than 0.5 kg, due to lack of binding power of the mat per se, the mat may easily cause pulling apart or so forth upon transporting a hot blank into a mold. Therefore, it is difficult to use in the light of handling.

The glass fiber mat having the property set forth above can be easily obtained by clasping the needled glass fiber mat. By needling, the continuous fiber entangles to form a mat which can be handled. At this time, by cutting of the fiber, short fiber may be created. However, the proportion of the short fiber thus created is small. Therefore, there is a method shearing of fiber is increased upon needle punching of the continuous fiber mat, by increasing punching density or by increasing penetration depth of the needle, the mat containing large amount of short fiber in the continuous fiber can be obtained.

However, when the punch density is increased, entangling of fiber is strengthened to cause necessity of high forming pressure for difficulty of loosing of mat in secondary forming. On the other hand, when the penetration depth of the needle is increased, fiber oriented in the thickness direction of the mat is increased to make mat loft (nominal thickness) greater. As a result, blank (hot blank) is significantly expanded to cause temperature difference between the inner layer and the surface layer in the blank. When heating period is expanded for eliminating the temperature difference, the surface layer becomes overheating condition to cause degradation of the external appearance of the formed product. Also, thermal aging is promoted to degrade physical property.

By clasping the needled glass mat as in the present invention, the entangled portion is selectively compressed and cut, wide range of fiber length distribution can be provided for reducing mat loft which can be a problem during heating.

As a method of clasping according to the present invention, it is simply apply pressure by clamping the glass fiber mat between two metal plates. For continuous production, it is desirable to clamp the glass fiber mat with a pair of metal rolls. On the other hand, by providing unevenness of the metal plates or roll, the mat with partially cut fiber can be obtained.

The hot blank loft of the stampable sheet according to the present invention is preferably 6 to 16 mm, and more preferably 8 to 12 mm. When the hot blank loft is less than 6 mm, the surface of the molten stampable sheet becomes tackiness can easily cause adhesion of the resin on a working glove during transportation of material to lower handling ability. On the other hand, when the hot blank loft is greater than or equal to 16 mm, heat mark (temperature difference) can be caused in the surface layer and the intermediate layer to cause lowering of mobility.

In the glass fiber mat according to the present invention, the standard mat loft, in which the Metsuke is 900 g/m², is preferably 5 to 10 mm, and more preferable 6 to 8 mm. When the mat loft is less than 5 mm, the resin may locally concentrated on the surface layer of the stampable sheet blank in resin impregnation process by lamination, and as a result, influence for handling, such as surface tackiness or so forth during heated state (hot blank) in secondary forming. Conversely, in case of the mat loft greater than or equal to 10 mm, the hot blank loft can become greater than or equal to 16 mm upon processing of the stampable sheet to cause heating mark.

EXAMPLES 1 TO 4, COMPARATIVE EXAMPLES 1 TO 3

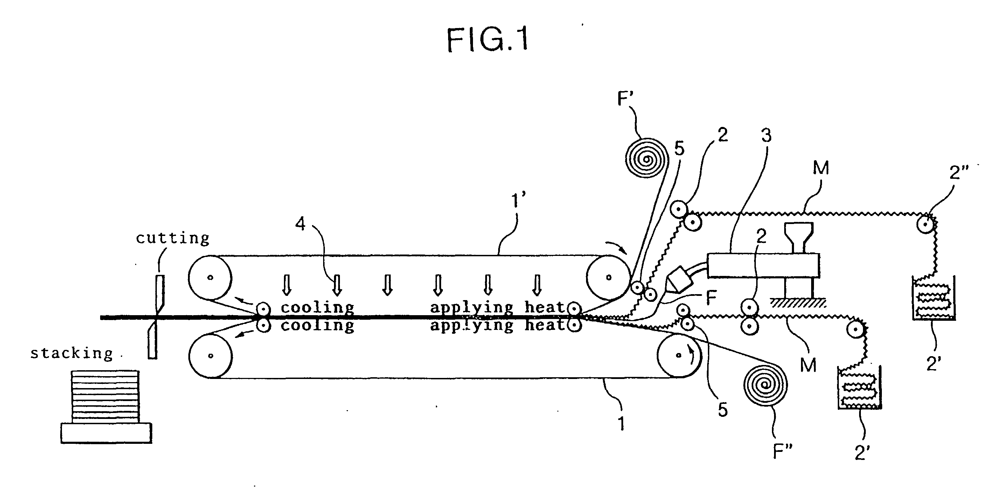

With employing glass fiber roving (manufactured by Nitto Boseki K K.)shown in a table 1, after shaking off the glass fiber roving without providing directionality, needle punching was effected under the condition of punching density of 30 needles/cm² and penetration depth of the needle of 14.5 mm to obtain the glass fiber mat of Metsuke 900 g/cm². This glass fiber mat was supplied to a stampable sheet producing system shown in Fig. 1 to obtain the stampable sheet of 40 Wt% of glass content, 4.4 kg/m² of Metsuke.

The stampable sheet producing system includes a double belt press type laminator 4 which laminates the supplied glass fiber mat with the thermoplastic resin melt F and thermoplastic resin films F' and F" wound on rolls, impregnates the resin by applying heat and pressure, cools the resin impregnated laminate under pressure to form into a sheet, a supply means for supplying the glass fiber mat M to the laminator, and a pair of pressure shearing rollers 5 located between the supply means 2 and endless belts 1, 1' of the laminator 4 for clasping the glass fiber mat to cut a part of fibers into short fiber. The roller is made of copper and has 200 mmφ of diameter, which exerts a line pressure shown in the table 1 for pressure shearing the continuous fiber to uniformly distribute the short fiber in the long fiber.

The pressure shearing line pressure of the roller 5 is set in consideration of the fiber length distribution after process, a mat strength and hot blank loft. This pressure is differentiated depending upon the binder composition or fiber diameter in the roving employed as the glass fiber mat. In order to obtain the glass fiber mat and the stampable sheet according to the present invention, the mat tensile strength and the hot blank loft have to be set within a specific range. For example, in case of the example 1, the pressure shearing line pressure is preferably 60 to 120 kg/cm, and more preferably 80 to 100 kg/cm.

TABLE 1

| NO. | Name of Roving | Fiber Diamete r | Binder | Pressure Shearing Line Pressure | Reinforcement |
|---|---|---|---|---|---|
| Exam. 1 Comp. 1 | RS42RA-305 RS42RA-305 | 23 μm 23 μm | vinyl acetate vinyl acetate | 90 kg/cm 0 kg/cm | Sheared Continuous |
| Exam. 2 Comp. 2 | RS24QA-305 RS24QA-305 | 17 μm 17 μm | acryl acryl | 35 kg/cm 10 kg/cm | Sheared Sheared |
| Exam. 3 Exam. 4 | RS24QA-305 RS24QA-305 | 17 μm 17 μm | acryl acryl | 45 kg/cm 70 kg/cm | Sheared Sheared |
| Comp. 3 | RS24QA-305 | 17 μm | acryl | 90 kg/cm | sheared |
| Comp. 4 | RS24QA-305 | 17 μm | acryl | 0 kg/cm | continuous /chopped |
| Comp. 5 | RS24QA-305 | 23 μm | vinyl acetate | 45 kg/cm | Sheared |
| Comp. 6 | RS24QA-305 | 23 μm | vinyl acetate | 135 kg/cm | Sheared |
| Comp. 7 | RS24QA-305 | 23 μm | vinyl acetate | 0 kg/cm | Continuous |

COMPARATIVE EXAMPLE 4

With employing glass fiber roving (manufactured by Nitto Boseki K K.) shown in a table 1, after shaking off the glass fiber roving on the conveyer without providing directionality, needle punching was effected under the condition of punching density of 30 needles/cm² and penetration depth of the needle of 14.5 mm to obtain the glass fiber mat of Metsuke 450 g/cm². This glass fiber mat was supplied to a stampable sheet producing system shown in Fig. 1 to obtain the stampable sheet without performing pressure shearing. At this time, for polypropylene to be used as the thermoplastic resin melt F, 33 Wt% of glass chopped strand was added. The polypropylene melt with glass chopped strand was supplied together with films F' and F" of sole polypropylene wound on the rolls (Metsuke 450 g/m²) to obtain the stampable sheet reinforced by both of the continous fiber and the short fiber of 40 Wt% of glass content (continuous fiber : glass chopped strand = 50 : 50), 4.4 kg/m$^2$ of Metsuke.

COMPARATIVE EXAMPLES 5, 6, 7

With employing glass fiber roving (manufactured by Nitto Boseki K K.)shown in a table 1, after shaking down the glass fiber roving onto the conveyer without providing directionality, needle punching was effected under the condition of punching density of 30 needles/cm$^2$ (40 needles/cm$^2$ in case of comparative example 7) and penetration depth of the needle of 14.5 mm to obtain the glass fiber mat of Metsuke 900 g/cm$^2$. This glass fiber mat was supplied to a stampable sheet producing system shown in Fig. 1 to obtain the stampable sheet with pressure shearing at 0 kg/cm, 45 kg/cm and 135 kg/cm.

EVALUATION METHOD

Properties of the foregoing glass mats for stampable sheet produced under the foregoing conditions are evaluated in the following evaluation method. The results of evaluation is shown in a table 2.

TABLE 2

|  |  | Ex. 1 | Comp. 1 | Comp. 5 | Comp. 6 | Comp. 7 |
|---|---|---|---|---|---|---|
| Needle Punch Condition (needles/cm$^2$) | | 30 | 30 | 30 | 30 | 40 |
| Pressure Shearing Condition (kg/cm) | | 90 | NO | 45 | 135 | NO |
| Fiber Length Distribution | less than 10 mm | 51 | 4 | 18 | 63 | 31 |
| | 10 to less than 50 mm | 42 | 3 | 31 | 37 | 59 |
| | 50 mm or more | 7 | 93 | 51 | 0 | 10 |
| | (Wt%) Total | 100 | 100 | 100 | 100 | 100 |
| Mat Loft (mm) | | 7 | 10 | 9 | 4 | 13 |
| Mat Strength (kg/200 cm width) | | 0.8 | 24.0 | 3.6 | 0.4 | 6.2 |
| Hot Blank Loft (mm) | | 10 | 16 | 12 | 6 | 24 |

① Mat Strength

From arbitrary position on the clasped glass fiber mat, 6 test pieces of 200 mm in width and 250 mm in length were cut. Employing a universal testing machine, maximum tensile strength was obtained by applying tension at testing speed of 20 mm/min.

② Fiber Length

From the clasped glass fiber mat, fibers were carefully drawn out by pincette and the lengths were read from a scale. The fiber lengths were measured for 1000 fibers per one test piece.

③ Hot Blank Loft

Blanks of 125 mm x 200 mm was heated for about 6 minutes until the surface temperatures became 210 ± 10 °C by a heating furnace set at 320 °C. The heated blank (hot blank) was quickly put on a machine platen. Also, in order to prevent waving in the hot blank, an iron plate of 125 mm x 200 mm (1.6 mm in thickness and 310g in weight) was mounted. After cooling for 1 hour, a weight of 5 kg was further mounted. Then, height at four corners were measured to taken an average thereof as the hot blank loft.

④ Minimum Forming Pressure (How Small Pressure is Required for Forming)

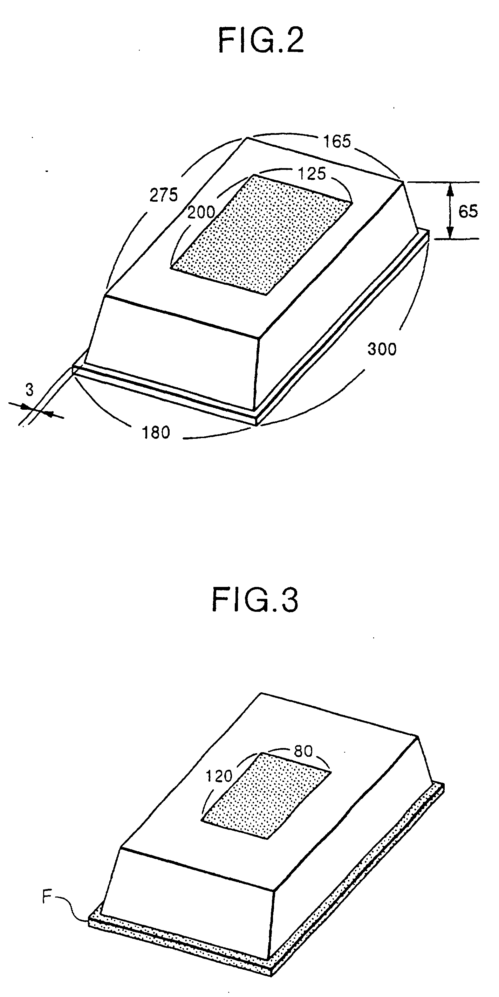

As an indicia of mobility in forming, three boxes shown in Fig. 2 were formed. Pressure in ton, at which two of three boxed could be formed without wane, was obtained per unit of 5 tons.

Blank Dimension:            125 mm x 200 mm x 3 pieces (330 ± 5g)

Heating Temperature:     210 ± 10 °C
Press Speed:             12 mm/sec.
Mold Temperature:        40 °C
Pressure Holding Period: 15 sec.

⑤  Mobility in Forming A (glass fiber content ratio between charge portion and end portion (hereinafter abbreviated as "GC ratio").

The formed product shown in Fig. 2 was formed at a pressure of 100 tons. Then, GC at the bottom portion and the end portion of the formed product as shown as hatched portion were measured.

$$A = (\text{end portion GC/bottom portion GC}) \times 100 \ [\%]$$

⑥  Mechanical Property

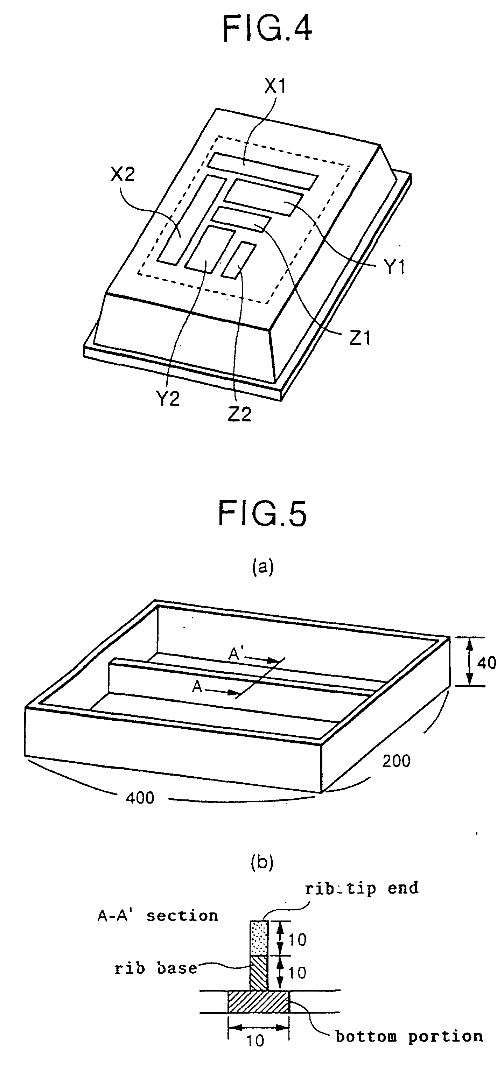

The five formed products shown in Fig. 4, having bending strength (ASTM D-790, kgf/mm$^2$) and tensile strength (ASTM D-638, kgf/mm$^2$) at a pressure of 100 tons. From the bottom portions, test pieces are cut as shown in Fig. 4 (10 pieces in average) and measurement was performed with respect to thereto.

⑦  Mobility in Forming B (mobility of glass fiber into the rib)

The formed products shown in Figs. 5(a) and 5(b) are formed under the following conditions and then mobility of the glass fiber into a center rib was evaluated.

Blank Dimension:         143 mm x 333 mm x 2 pieces (420 ± 6g)
Rib Thickness:           2mm
Rib Height:              20 mm
Heating Temperature:     210 ± 10 °C
Press Speed:             16 mm/sec.
Mold Temperature:        50 °C
Pressure Holding Period: 30 sec.
Forming Pressure:        180 tons

$$B = (\text{rib tip end GC/bottom portion GC}) \times 100 \ [\%]$$

⑧  Anisotropy (It is not desirable to cause strong anisotropy due to orientation of GF at the flowing portion)

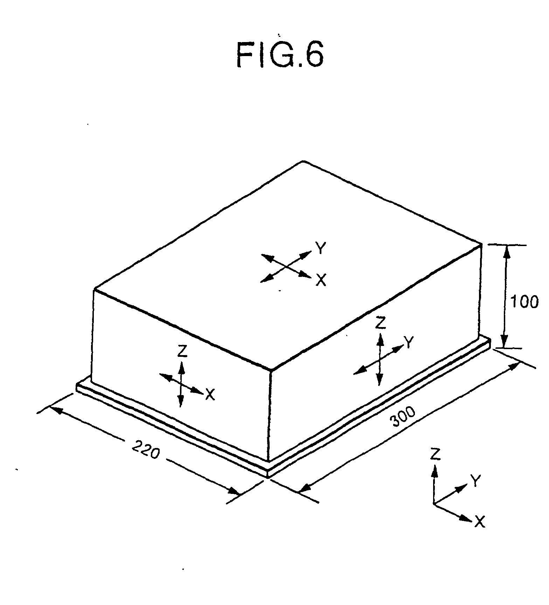

The formed product shown in Fig. 6 was formed under the following condition. Then, bending properties at the bottom portion, longer side portion and shorter side portion are evaluated by measuring bending strengths in orthogonal two directions and expressing the ratio by %.

Blank Dimension:         143mm x 215mm x 4 pieces (541 ± 8 g)
Heating Temperature:     210 ± 10 °C
Press Speed:             16 mm/sec.
Mold Temperature:        50 °C
Pressure Holding Period: 30 sec.
Forming Pressure:        180 tons

Next, by impregnating polypropylene resin in this mat, stampable sheet was prepared. Property of the obtained stampable sheet was evaluated by the foregoing evaluation methods. The results of evaluation is shown in a table 3.

TABLE 3

| | EX.1 | COM.1 | EX.2 | COM.2 | EX.3 | EX.4 | COM.3 | COM.4 | COM.5 | COM.6 | COM.7 |
|---|---|---|---|---|---|---|---|---|---|---|---|
| Hot Blank Loft | 10 | 16 | 13 | 17 | 10 | 8 | 8 | 5 | 12 | 6 | 24 |
| Tensile Strength | 8.0 | 8.7 | 6.8 | 8.0 | 7.3 | 6.8 | 5.0 | 4.7 | 8.0 | 6.0 | 5.8 |
| Bending Strength | 14.6 | 16.8 | 14.2 | 16.1 | 14.9 | 12.7 | 11.7 | 9.9 | 15.1 | 12.5 | 13.7 |
| Minimum Forming Pressure | 40 | 55 | 30 | 55 | 35 | 25 | 25 | 25 | 45 | 25 | 60 |
| Forming Mobility A | 96 | 75 | 97 | 80 | 92 | 104 | 103 | 99 | 91 | 100 | 98 |
| Forming Mobility B | 60 | 6 | 68 | 20 | 74 | 85 | 90 | 87 | 34 | 86 | 67 |
| Anisotropy — Bottom (y/x) | 109 | 96 | 109 | 101 | 103 | 105 | 106 | 65 | - | - | - |
| Anisotropy — Longer Side (y/z) | 98 | 111 | 100 | 116 | 102 | 98 | 109 | 116 | - | - | - |
| Anisotropy — Shorter Side (x/z) | 99 | 105 | 98 | 103 | 99 | 100 | 102 | 153 | - | - | - |

As can be clear from the table 3, the stampable sheet employing the pressured and sheared mat can lower minimum forming pressure with minimizing lowering of the mechanical strength. Since the glass fiber can flow even into the tip end of the rib or the end portion of the formed product, strength may not lower locally, and significant anisotropy may not be caused, Furthermore, distortion to be caused on the formed product is small. Therefore, freedom in designing of product can be increased.

It should be noted the foregoing embodiments have been exemplified the preferred range of the tensile strength and the mat loft in the case where Metsuke of the glass mat is 900 $g/m^2$. However, even if Metsuke is less than or more than 900 $g/m^2$, it should be encompassed within the present invention as long as the reduced values of the tensile strength and the mat loft to Metsuke 900 $g/m^2$ fall within the foregoing range.

As set forth above, in the glass fiber mat for the stampable sheet according to the present invention, the continuous glass fiber, and long fiber having the fiber length greater than or equal to 10 mm and short fiber having the fiber length less than 10 mm which are formed by partially cutting the continuous glass fiber by clasping, are contained uniformly. Therefore, it may not expand significantly even upon heating so that the temperature difference between the surface layer and the inner layer may not be caused. Also, the obtained formed product has high dimensional stability and small fluctuation of strength and anisotropy so that the stampable sheet having advantages of the long fiber reinforcement and the short fiber reinforcement .

In the production process of the glass mat according to the method of the present invention, since the long fiber having the fiber length greater than or equal to 10 mm and the short fiber having the fiber length less than 10 mm are formed by partially cutting the glass fiber by clasping the glass fiber mat which is formed with continuous glass fiber, at a predetermined pressure, the glass fiber mat suitable for producing superior stampable sheet can be produced while production method is simple.

The production system according to the present invention can produce the glass fiber mat, from which the superior stampable mat can be obtained with simple construction, in which only a pair of rollers are provided between the continuous fiber mat supply means and the laminator.

## Claims

1. A glass fiber mat, from which a fiber reinforced thermoplastic resin stampable sheet is produced, containing continuous glass fiber, and long fiber having fiber length greater than or equal to 10 mm and short fiber having fiber length less than 10 mm which are formed by partially cutting said glass fiber by clasping.

2. A glass fiber mat for a stampable sheet as set forth in claim 1, wherein different fiber length of fibers obtained by clasping a continuous fiber needling mat, and the long fiber having fiber length greater than or equal to 10 mm and short fiber having fiber length less than 10 mm are distributed uniformly.

3. A glass fiber mat for a stampable sheet as set forth in claim 1 or 2, which contains 30 to 60 Wt% of glass fiber having fiber length less than 10 mm, 70 to 40 Wt% of glass fiber having fiber length greater than or equal to 10 mm, and said glass fiber having fiber length greater than or equal to 10 mm contains more than or equal to 5% of glass fiber having fiber length greater than or equal to 50 mm.

4. A glass fiber mat for a stampable sheet as set forth in any one of claims 1 to 3, wherein when a unit weight is 900 $g/m^2$, a tensile strength is 0.5 to 3 kgf/200 mm and a mat loft is 5 to 10 mm.

5. A stampable sheet produced by impregnating a thermoplastic resin into a glass fiber mat for a stampable sheet as defined in any one of claims 1 to 4.

6. A stampable sheet as set forth in claim 5, wherein when a fiber content is 40 Wt% and a unit weight is 4.4 $kg/m^2$, a hot blank loft is 6 to 16 mm.

7. A production process for producing a glass fiber mat to be formed into a fiber reinforced thermoplastic resin stampable sheet by impregnation of a thermoplastic resin comprising a step of clasping a glass fiber mat formed with continuous glass fiber between a pair of rollers at a predetermined pressure to form long fiber having fiber length greater than or equal to 10 mm and short fiber having fiber length less than 10 mm which are formed by partially cutting said glass fiber.

8. A production process according to claim 7, comprising steps of needling a continuous fiber glass fiber mat for entangling fibers and thereafter clasping said glass fiber mat formed with continuous glass fiber between a pair of rollers at a predetermined pressure to form long fiber having fiber length greater than or equal to 10 mm and short fiber having fiber length less than 10 mm which are formed by partially cutting said glass fiber.

9. A production process according to claim 7 or 8 comprising the steps of needling a continuous fiber glass fiber mat for entangling fibers, clasping said glass fiber mat formed with continuous glass fiber for partially cutting the fiber, and thereafter impregnating said thermoplastic resin.

10. A production system of a stampable sheet comprising:

a laminator;
fiber mat supply means for supplying a glass mat into said laminator; and
a pair of rollers arranged between said laminator and said fiber mat supply means and clasping said fiber mat for partially cutting said glass fiber into longer fiber having fiber length greater than or equal to 10 mm and short fiber having fiber length less than 10 mm.

**Patentansprüche**

1. Glasfasermatte, aus der eine faserverstärkte prägbare bzw. stanzbare Bahn aus thermoplastischem Kunststoff hergestellt wird, die endlose Glassfasern und lange Fasern mit einer Faserlänge länger als oder gleich 10 mm und kurze Fasern mit einer Faserlänge kürzer als 10 mm enthält, die durch teilweises Schneiden der Glasfasern im Wege des Umklammerns gebildet sind.

2. Glasfasermatte für eine prägbare bzw. stanzbare Bahn nach Anspruch 1, wobei unterschiedliche Faserlängen der Fasern im Wege des Umgreifens einer Vernadelungsmatte aus endlosen Fasern erhalten sind und die langen Fasern, die eine Faserlänge länger als oder gleich 10 mm aufweisen, und die kurzen Fasern, die eine Faserlänge kürzer als 10 mm aufweisen, gleichmäßig verteilt sind.

3. Glasfasermatte für eine prägbare bzw. stanzbare Bahn nach Anspruch 1 oder 2, die 30 bis 60 Gew.-% Glasfasern mit einer Faserlänge kürzer als 10 mm, 70 bis 40 Gew.-% Glasfasern mit einer Faserlänge länger als oder gleich 10 mm enthält und wobei die Glasfasern mit einer Faserlänge länger als oder gleich 10 mm mehr als oder gleich 5 % Glasfasern mit einer Faserlänge länger als oder gleich 50 mm enthalten.

4. Glasfasermatte für eine prägbare bzw. stanzbare Bahn nach irgendeinem der Ansprüche 1 bis 3, wobei bei einem Einheitsgewicht von 900 g/m$^2$ die Zugfestigkeit 0,5 bis 3 kgf/200 mm misst und die Mattenhöhe bzw. -stärke 5 bis 10 misst.

5. Prägbare bzw. stanzbare Bahn hergestellt im Wege des Einimprägnierens eines thermoplastischen Kunststoffs in eine Glasfasermatte für eine prägbare bzw. stanzbare Bahn nach irgendeinem der Ansprüche 1 bis 4.

6. Prägbare bzw. stanzbare Bahn nach Anspruch 5, wobei der Fasergehalt 40 Gew.-% beträgt und das Einheitsgewicht 4,4 kg/m$^2$ misst und die Höhe bzw. Stärke des heißen Rohlings 6 bis 16 mm misst.

7. Herstellungsverfahren für die Herstellung einer Glasfasermatte, die zu einer faserverstärkten prägbaren bzw. stanzbaren Bahn aus thermoplastischen Kunstoff im Wege des Einimprägnierens eines thermoplastischen Kunststoffs auszubilden ist, umfassend einen Schritt des Umgreifens einer Glasfasermatte, die mit endlosen Glasfasern ausgebildet ist, zwischen den Walzen eines Walzenpaars unter einem vorbestimmten Druck zur Bildung langer Fasern mit einer Faserlänge länger als oder gleich 10 mm und kurzer Fasern mit einer Faserlänge kürzer als 10 mm, die durch teilweises Zerschneiden der Glasfasern gebildet werden.

8. Herstellungsverfahren nach Anspruch 7, umfassend die Schritte des Vernadelns der Glasfasermatte mit endlosen Fasern zum Einfangen von Fasern und des anschließenden Umgreifens der Glasfasermatte, die mit endlosen Glasfasern ausgebildet ist, zwischen den Walzen eines Walzenpaars unter einem vorbestimmten Druck zur Bildung langer Fasern mit einer Faserlänge länger als oder gleich 10 mm und kurzer Fasern mit einer Faserlänge kürzer als 10 mm, die durch teilweises Zerschneiden der Glasfasern gebildet werden.

9. Herstellungsverfahren nach Anspruch 7 oder 8, umfassend die Schritte des Vernadelns der Glasfasermatte mit endlosen Fasern zum Einfangen von Fasern, des Umgreifens der Fasermatte, die mit endlosen Glasfasern ausgebildet ist, zum teilweisen Zerschneiden der Fasern und des anschließenden Einimprägnierens des thermoplastischen Kunststoffs.

**10.** Herstellungssystem für eine prägbare bzw. stanzbare Bahn, umfassend:

eine Laminierungseinrichtung;
ein Fasermatten-Zuführungsmlttel zum Zuführen einer Glasmatte in die Laminierungseinrichtung;
ein Paar Walzen, die zwischen der Laminierungseinrichtung und dem Fasermatten-Zuführungsmittel angeordnet sind und die Fasermatte zum teilweisen Zerschneiden der Fasern in lange Fasern mit einer Faserlänge länger als oder gleich 10 mm und in kurze Fasern mit einer Faserlänge kürzer als 10 mm umgreifen.

**Revendications**

**1.** Mat de fibres de verre, à partir duquel une feuille estampable en résine thermoplastique renforcée par des fibres est produite, contenant une fibre de verre continue et une fibre longue ayant une longueur de fibre supérieure ou égale à 10 mm et une fibre courte ayant une longueur de fibre inférieure à 10 mm qui sont formées par coupe partielle de ladite fibre de verre par étreinte.

**2.** Mat de fibres de verre pour une feuille estampable selon la revendication 1, dans lequel différentes longueurs de fibres obtenues par étreinte d'un mat d'aiguilletage de fibre continue, et la fibre longue ayant une longueur de fibre supérieure ou égale à 10 mm et la fibre courte ayant une longueur de fibre inférieure à 10 mm sont réparties uniformément.

**3.** Mat de fibres de verre pour une feuille estampable selon la revendication 1 ou 2, qui contient 30 à 60% en poids de fibre de verre ayant une longueur de fibre inférieure à 10 mm, 70 à 40% en poids de fibre de verre ayant une longueur de fibre supérieure ou égale à 10 mm, et ladite fibre de verre ayant une longueur de fibre supérieure ou égale à 10 mm contient au moins 5% de fibre de verre ayant une longueur de fibre supérieure ou égale à 50 mm.

**4.** Mat de fibres de verre pour une feuille estampable selon l'une quelconque des revendications 1 à 3, dans lequel lorsqu'un poids unitaire est de 900 g/m², la résistance à la traction est de 0,5 à 3 kgf/200 mm et la hauteur du mat est de 5 à 10 mm.

**5.** Feuille estampable produite en imprégnant une résine thermoplastique dans un mat de fibres de verre pour une feuille estampable comme défini dans l'une quelconque des revendications 1 à 4.

**6.** Feuille estampable selon la revendication 5, dans laquelle lorsque la teneur en fibre est de 40% en poids et que le poids unitaire est de 4,4 kg/m², la hauteur d'ébauche à chaud est de 6 à 16 mm.

**7.** Procédé de production pour produire un mat de fibres de verre devant être formé en une feuille estampable en résine thermoplastique renforcée par des fibres en imprégnant une résine thermoplastique, comprenant une étape consistant à étreindre un mat de fibres de verre formé d'une fibre de verre continue entre deux rouleaux sous une pression prédéterminée pour former une fibre longue ayant une longueur de fibre supérieure ou égale à 10 mm et une fibre courte ayant une longueur de fibre inférieure à 10 mm, lesquelles sont formées par coupe partielle de ladite fibre de verre.

**8.** Procédé de production selon la revendication 7, comprenant les étapes qui consistent à aiguilleter un mat de fibres de verre à fibre continue pour entremêler des fibres et à étreindre ensuite ledit mat de fibres de verre formé d'une fibre de verre continue entre deux rouleaux sous une pression prédéterminée pour former une fibre longue ayant une longueur de fibre supérieure ou égale à 10 mm et une fibre courte ayant une longueur de fibre inférieure à 10 mm, qui sont formées par coupe partielle de ladite fibre de verre.

**9.** Procédé de production selon la revendication 7 ou 8, comprenant les étapes qui consistent à aiguilleter un mat de fibres de verre à fibre continue pour entremêler des fibres, à étreindre ledit mat de fibres de verre formé d'une fibre de verre continue pour couper partiellement la fibre, et à imprégner ensuite ladite résine thermoplastique.

**10.** Système de production d'une feuille estampable, comportant:

une machine à stratifier;
un moyen d'alimentation en mat de fibres pour introduire un mat de verre dans ladite machine à stratifier; et deux rouleaux agencés entre ladite machine à stratifier et le moyen d'alimentation en mat de fibres et étreignant ledit mat de fibres pour couper partiellement ladite fibre de verre en une fibre longue ayant une longueur de fibre supérieure ou égale à 10 mm et une fibre courte ayant une longueur de fibre inférieure à 10 mm.

EP 0 775 561 B1

# FIG.1

# FIG.2

# FIG.3

# FIG.4

# FIG.5

(a)

(b)

A-A' section

rib tip end

rib base

bottom portion

# FIG.6

# FIG.7

to needler
⇐

A

B

A

B

A

C

EP 0 775 561 B1